# EUROPEAN PATENT SPECIFICATION

(11) **EP 3 643 950 B1**
(45) Date of publication and mention of the grant of the patent: **29.06.2022**
(21) Application number: 19203509.5
(22) Date of filing: 16.10.2019
(51) Int. Cl.: F16J 15/34

(54) **MECHANICAL SEAL**
GLEITRINGDICHTUNG
GARNITURE MÉCANIQUE D'ÉTANCHÉITÉ

(30) Priority: 23.10.2018 IT 201800009708
(43) Date of publication of application: 29.04.2020
(73) Proprietor: Fluiten Italia S.p.A., 20154 Milano (IT)
(72) Inventor: COLOMBO, Alberto Delfo, 20154 MILANO (IT); ZUCCON, Luca, 20831 SEREGNO (MONZA BRIANZA) (IT)
(74) Representative: Inchingalo, Simona

(56) References cited:
- EP-A1- 0 385 138
- WO-A1-03/069197
- US-A- 2 575 549
- US-A- 3 953 038

## Description

This invention relates to a mechanical seal.

Mechanical seals are devices that can be applied to rotating shafts to prevent fluid seepages and that are able to withstand high pressures and mechanical stresses.

Mechanical seals can be used, for example, in centrifugal pumps and motorboats in which the shaft transmits rotary motion from the engine, located inside the boat, to the propeller, which is completely immersed in water, to prevent liquid entering into the boat through the passage of the crankshaft.

Today, mechanical sealing is achieved by a pair of annular bodies, one stationary and one rotating seal, placed around a crankshaft and in relative motion to each other when the crankshaft is driven; the two annular bodies are coaxial and coupled frontally in such a way that one face with a circular crown of one body is in contact with that of the adjacent annular body.

The rotating annular body is kept in contact with the stationary one by means of a series of springs that axially push it against the stationary body.

During rotation, a minimum amount of fluid, sufficient to lubricate and avoid overheating, seeps through the two annular bodies without, however, escaping into the environment that needs to be insulated.

With particular reference to the rotating part, it generally comprises a main body having the sealing surface and an annular body that is rigidly connectable to a rotating shaft so as to guarantee a seal on it.

In order to enable the main body and the annular body to float together, they are coupled with play along the rotation axis of the shaft, in such a way that they are free to perform a limited and controlled translation in the axial direction.

At the same time, the seal comprises axial springs packed into the main body and the annular body to absorb these axial movements and to maintain the mutual pressure between the coupling surfaces.

Examples of known mechanical seals are disclosed in EP0385138A1 (which discloses the subject matter of the preamble of appended claim 1)

US2575549A, WO03/069197A1 and US3953038A. Disadvantageously, this type of mechanical seal has problems regarding the wear and fatigue of the springs, of the surfaces on which they rest, and of the sliding contact areas between the main body and the annular body.

In addition, in the above known solution, any compression of the springs caused by axial displacements of the engine's axis will significantly change the pressure between the sealing surfaces of the mechanical seal, resulting in friction, overheating, and excessive wear (in the case of greater compression) or fluid seepage (in the case of lower compression). In this context, the technical task underlying this invention is to propose a mechanical seal that overcomes at least some of the above-mentioned drawbacks of the prior art.

In particular, it is the purpose of this invention to provide a mechanical seal with better fatigue resistance than known seals.

Another purpose of this invention is to propose a mechanical seal that is able to maintain the force of reciprocal contact between the coupling surfaces more uniform as a result of the crankshaft's translations.

It is also the purpose of this invention to provide a mechanical seal that is able to keep the elastic bands isolated from contact with the liquid where it is required to make a seal.

The specified technical task and purposes are substantially achieved by means of a mechanical seal comprising the technical features set forth in one or more of the accompanying claims. The dependent claims correspond to possible embodiments of the invention.

Further features and advantages of this invention will become more apparent from the indicative, and therefore non-limiting, description of a preferred, but not exclusive, embodiment of a mechanical seal.

This description will be set forth hereinafter with reference to the accompanying drawings - provided to illustrate rather than limit the invention's purposes - wherein:
- Figure 1 shows a cross-section view of a mechanical seal produced according to this invention;
- Figure 2 shows a perspective view of a detail of the mechanical seal in Figure 1;
- Figure 3 shows a cross-section view of the detail in Figure 2;
- Figure 4 shows a perspective view of a detail of the mechanical seal in Figure 1;
- Figure 5 shows a cross-section view of the detail in Figure 4;
- Figure 6 shows a frontal view of a detail of the mechanical seal in Figure 1;

With reference to the figures, a mechanical seal is indicated as a whole by the reference numeral 1 and will be referred to by the notation "mechanical seal 1" hereinafter.

The mechanical seal 1 is applicable to a fixed wall "P" and to a rotating shaft "A" that crosses an opening in the wall "P", so as to generate a fluid-tight seal through this opening, in particular to isolate a first side of the wall "P" from a fluid present at an opposite second side of the same wall.

The wall "P" forms part of a boat's hull, for example, and the rotating shaft "A" crosses an opening in the hull to transmit motion from the engine, located on board the boat, to the propeller, located outside the hull. In this type of application, the mechanical seal 1 isolates the inside of the hull from the water present outside of the hull.

In this description, we indicate one side of the mechanical seal 1 exposed to the fluid to be contained as the external side "E" and the side opposite to the external side "E" as the internal side "I".

According to the embodiment illustrated, the sealing element 130 comprises a plurality of bodies assembled together; according to an alternative embodiment not illustrated, the sealing element 130 is made of one piece.

The mechanical seal 1 comprises a rotating part 100, which is rigidly connectable to the rotating shaft "A" by means of a first fluid-tight coupling and a fixed part 200, which is rigidly connectable to the wall "P" by means of a second fluid-tight coupling.

The rotating part 100 and the fixed part 200 have their respective coupling surfaces, in particular a rotating coupling surface 101 and a fixed coupling surface 201, abutting and pressed against each other so that they slide together during the rotation of the rotating shaft "A" and generate a fluid-tight seal.

The rotating part 100 comprises an annular body 110 that is rigidly connectable to the rotating shaft "A" and that can be rotated together with it around a rotation axis "R".

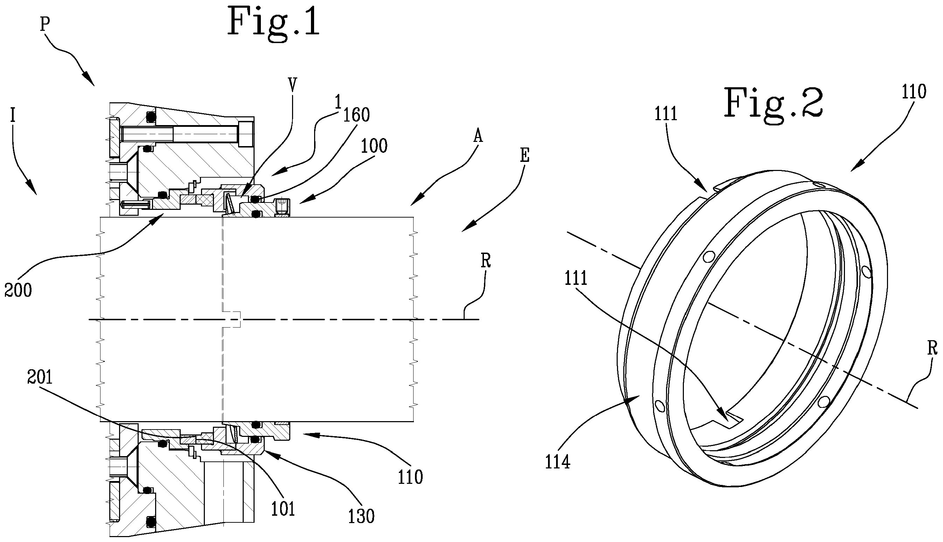

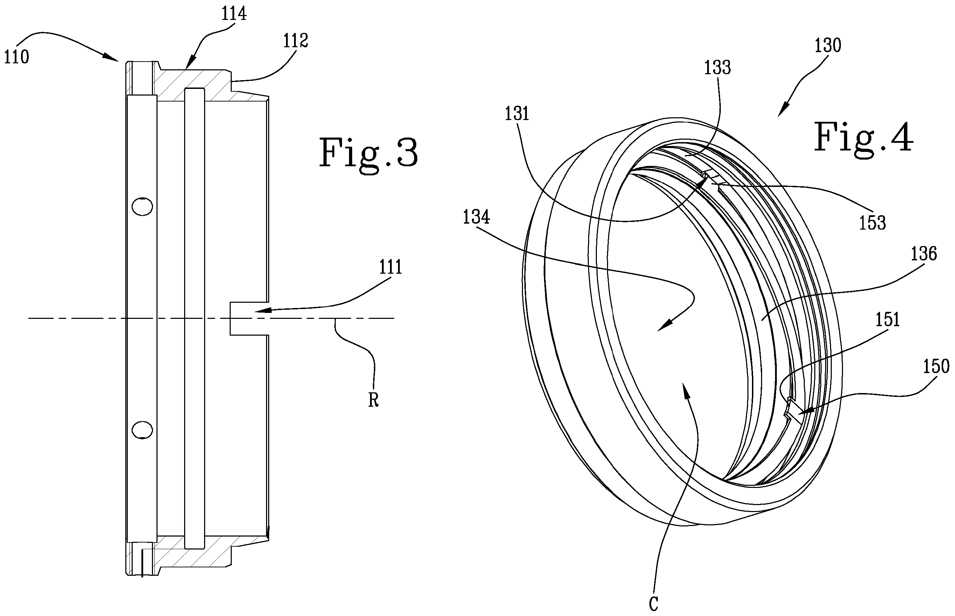

The annular body 110, illustrated in Figures 2 and 3, is preferably, essentially a bushing body developed around the rotation axis "R".

The annular body 110 has a plurality of inner recesses 111, preferably two, that, in the solution illustrated, cross a cylindrical wall of the annular body 110 transversely to the rotation axis "R".

The inner recesses 111 are preferably developed parallel to the rotation axis "R" and arranged at one end of the annular body 110 turned towards the outer side "E" of the mechanical seal 1.

In addition, the annular body 110 preferably has an abutment shoulder 112 developed around the rotation axis "R" and preferably, essentially normal to it.

In the preferred embodiment, the abutment shoulder 112 touches one end of the inner recesses 111.

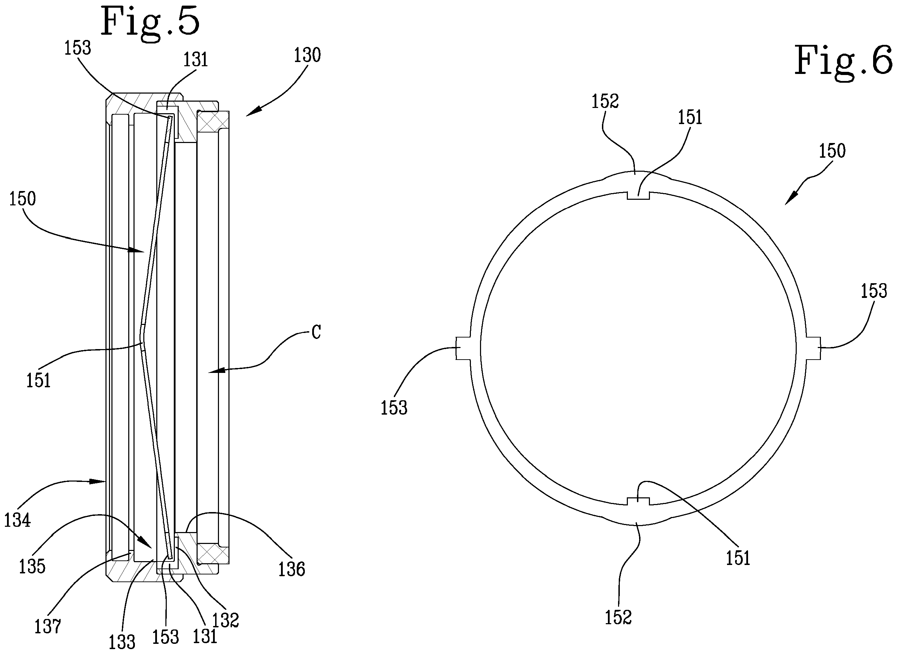

The rotating part 100 also comprises a sealing element 130, illustrated in Figures 4 and 5, having a central cavity "C" that is suitable for housing the rotating shaft "A".

The sealing element 130 has the rotating coupling surface 101 described above and is coupled to the clamping ring 110 so as to be mobile with respect to it (and with respect to the rotating shaft "A") along the rotation axis "R" in order to maintain the coupling of the rotating coupling surfaces 101 and static coupling surfaces 201 following translation from the rotating shaft "A" and of the annular body 110 connected to it.

The sealing element 130 preferably has a cylindrical mouth 134 for access to the central cavity "C", and the annular body 110 has a sliding coupling portion 114 inserted into that mouth 134.

The coupling portion 114 is preferably adjacent to the abutment shoulder 112 of the annular body 110.

The mouth 134 is preferably turned towards the inner side "I" of the mechanical seal 1 while the coupling portion 114 is turned towards the outer side "E" of the seal.

In addition, the sealing element 130 preferably has a slit 136 in communication with the mouth 134, defining a portion of the central cavity "C" that has a smaller diameter than the mouth 134, preferably sized so as to enable a flush or fluid-tight coupling with the rotating shaft "A".

The sealing element 130 preferably has an inner annular groove 135 facing the rotation axis "R and preferably interposed between the mouth 134 and the slit 136.

This annular groove 135 preferably has a width, measured along the rotation axis "R", comprised between 5 mm and 15 mm and, even more preferably, between 8 mm and 12 mm.

The annular groove 135 preferably has a larger diameter than the mouth 134 and the slit 136, so as to define an annular surface 133 developed around the rotation axis "R", a stop shoulder 132 developed normally around the rotation axis "R" and arranged between the annular surface 133 and the slit 136, and, preferably, a containing shoulder 137 arranged between the annular surface 133 and the mouth 134.

The sealing element 130 preferably has a plurality of outer recesses 131, preferably two, preferably turned towards the inner side "I" of the mechanical seal 1.

In the preferred embodiment, the outer recesses 131 are partially obtained at the stop shoulder 132 and partially obtained at the annular surface 133. The mechanical seal 1 also comprises active elastic means between the annular body 110 and the sealing element 130 to keep the rotating coupling surface 101 pressed against the static coupling surface 201. These elastic means are also configured to enable a mutual position adjustment along the rotation axis "R" between the annular body 110 and the sealing element 130, for example as a result of translating movements of the rotating shaft "A" along the rotation axis "R" with respect to the wall "P".

The elastic means advantageously comprise a wave spring 150 illustrated in Figure 6, essentially annular in shape, preferably with two waves and preferably with a closed annular shape.

The wave spring 150 preferably has an elastic constant comprised between 10 N/mm and 30 N/mm and even more preferably comprised between 15 N/mm and 20 N/mm.

In the embodiment illustrated, the wave spring 150 is sized for a shaft with a diameter of 80 mm and has a constant thickness of 1.1 mm.

The wave spring 150 is preferably interposed between the abutment shoulders 112 and the stop shoulders 132 and abuts against them to be compressed during a mutual approach of the annular body 110 and the sealing element 130 along the rotation axis "R".

In particular, the wave spring 150 has respective and opposite ends, coinciding with the ridges and depressions of its wave profile, abutting against the abutment shoulder 112 and the stop shoulder 132.

In addition, the wave spring 150 is preferably housed in the annular groove 135 and has an outer profile essentially counter-shaped to the annular surface 133 and an inner diameter preferably smaller than the diameter of the containing shoulder 137 and the mouth 134 so as to protrude with respect to them towards the rotation axis "R".

The containing shoulder 137 is preferably configured to engage the wave spring 150 in a completely extended configuration to define its maximum extension or end stop along the rotation axis "R", coinciding with the width of the annular groove 135. In its preferred embodiment, the width of the annular groove 135 is smaller than the length of the wave spring 150 in unloaded configuration, so as to determine a prestressing of the wave spring 150 housed in the annular groove 135 and in a completely extended configuration between 200N and 300N, preferably between 210N and 220N.

The wave spring 150 preferably has a first shape coupling with the annular body 110 configured to rotationally constrain the wave spring 150 and the annular body 110 around the rotation axis "R".

The wave spring 150 preferably has a plurality of inner teeth 151, preferably one for each wave, protruding towards the rotation axis "R" and configured to engage the inner recesses 111 of the annular body 110 to define the first shape coupling.

The inner teeth 151 are preferably positioned at the respective ends of the wave profile of the wave spring 150.

In the illustrated embodiment, the inner teeth 151 are rectangular or square in shape, preferably with a sharp edge.

The wave spring 150 preferably has a local thickening 152 at each inner tooth 151 that extends in a radial and/or axial direction with respect to the rotation axis "R".

The thickening 152 is defined by a progressive increase in thickness or, preferably, width starting from a minimum value up to a maximum value, the maximum thickness being arranged at the respective inner tooth 151. The thickening 152 is preferably defined by a protrusion extending in the outer radial direction opposite to the respective inner tooth 151. This protrusion preferably has an outer shape like the arc of a circle with a smaller radius than the radius of the annular profile of the wave spring 150.

The ratio of the radius of an outer profile of the thickening 152 to the outer radius of the annular profile of the wave spring 150 is preferably comprised between 0.4 and 0.6, even more preferably between 0.45 and 0.50.

The wave spring 150 has a second shape coupling with the sealing element 130, which is configured to constrain the wave spring 150 and the sealing element 130 around the rotation axis "R".

Advantageously, the first and second shape coupling described above determine a rotational constraint between the annular body 110 and the sealing element 130. Thanks to the interposition of the wave spring 150, these can mutually move along the rotation axis "R", though opposed by the axial action of the wave spring 150, and are both constrained to rotate around the rotation axis "R" in a manner integral to the rotating shaft "A". The wave spring 150 preferably has a plurality of outer teeth 153, preferably one for each wave, protruding away from the rotation axis "R" and configured to engage the outer recesses 131 to define the second shape coupling.

The outer teeth 153 are preferably positioned at the respective ends of the wave profile of the wave spring 150, opposite and spaced along the rotation axis "R" with respect to the ends that have the inner teeth 151.

In the embodiment illustrated, the wave spring 150 has two inner teeth 151 arranged diametrically opposite to the centre of development of the wave spring 150 and two outer teeth 153 that are also arranged diametrically opposite to the centre of development of the wave spring 150 and angularly spaced 90° apart from the inner teeth 151.

The wave spring 150 preferably has a radial width, measured net of the local protrusions such as the inner and outer teeth 151 and 153 and the thickening 152, which is circumferentially variable with regularity.

In particular, the radial width varies according to a strictly increasing function from a minimum value as at the second shape coupling (i.e. at the outer teeth 153) to a maximum value as at the first shape coupling (i.e. at the inner teeth 151).

The radial width variation is preferably defined by an eccentricity of the inner perimeter of the annular profile of the wave spring 150.

In the illustrated embodiment, this increasing function defines a gradual increase in radial width of about 1 mm between the second and the first shape coupling.

The thickenings 152 described above determine a local increase in radial width near the first shape coupling that adds to the gradual increase described above.

The wave spring 150 preferably has additional inner teeth, not illustrated, arranged along its profile at the second shape coupling (i.e. at the outer teeth 153, on the opposite side of the wave spring 150 profile) that extend towards the rotation axis "R" to compensate for the eccentricity of the inner perimeter of the wave spring 150.

The annular body 110 is preferably coupled to the sealing element 130 in such a way as to have an outer surface facing the annular groove 135 to define in cooperation with it a closed housing volume "V" for the wave spring 150.

The rotating part 100 preferably comprises sealing means 160, for example one or more O' rings, interposed between the annular body 110 and the sealing element 130 to seal the housing volume "V" of the wave spring 150 at least with respect to the fluid on the outer side "E" of the mechanical seal 1.

This invention achieves the purpose proposed, overcoming the drawbacks of the prior art.

The shape of the wave spring and its coupling with the annular body and with the sealing element advantageously enable the mutual rotary dragging between the two elements and, at the same time, sliding inside the mechanical seal to be reduced.

In addition, the configuration and arrangement of the wave spring and the shape of the sealing element and of the annular body enable a slight variation in the elastic force following a translation of the rotating shaft, so as to enable the static and rotating coupling surfaces to operate under a reciprocal pressure close to that of the design.

## Claims

1. A mechanical seal (1), comprising a rotating part (100) connectable to a rotating shaft (A) and a fixed part (200) connectable to a fixed wall (P); said rotating part (100) comprising:
- an annular body (110) rigidly connectable to a shaft (A) rotating about a rotation axis (R);
- a sealing element (130) having a rotating coupling surface (101) configured for abutting against a respective static coupling surface (201) of said fixed part (200); and
- elastic means active between said annular body (110) and said sealing element (130) for maintaining said rotating coupling surface (101) pressed against said static coupling surface (201) and allowing a mutual position adjustment along said rotation axis (R) between the annular body (110) and the sealing element (130);
wherein said elastic means comprise a wave spring (150) having a substantially annular profile, having a first shape coupling with said annular body (110) configured for rotationally constraining said wave spring (150) to said annular body (110) around said rotation axis (R) and a second shape coupling with said sealing element (130) configured for rotationally constraining said sealing element (130) to said wave spring (150) around the rotation axis (R);
wherein said sealing element (130) has a substantially cylindrical mouth (134), said annular body (110) having a coupling portion (114) defining an abutment shoulder (112),
**characterized in that** said coupling portion (114) is slidably inserted into said mouth (134), said wave spring (150) having an inner diameter smaller than a mouth (134) diameter and said abutment shoulder (112) being configured for abutting against respective ends of said wave spring (150).

2. A mechanical seal (1) according to claim 1, wherein said annular body (110) has a plurality of inner recesses (111), preferably one for each wave of the wave spring (150), and said wave spring (150) has a plurality of respective inner teeth (151), preferably one for each wave defined by the wave spring (150), protruding towards the rotation axis (R) and configured for engaging said inner recesses (111) in order to define said first shape coupling.

3. A mechanical seal (1) according to claim 2, wherein the wave spring (150) has, at each of said inner teeth (151), a local thickening (152) extending in a radial and/or axial direction with respect to said rotation axis (R), said thickening (152) being defined by a progressive increase in thickness and/or width starting from a minimum value up to a maximum value, said maximum value corresponding to the position of said inner tooth (151).

4. A mechanical seal (1) according to claim 3, wherein said thickening (152) is defined by a protrusion extending in an outer radial direction, opposite to said inner tooth (151), preferably said protrusion having an outer shape of an arc of a circle with a smaller radius than a radius of an annular profile of the wave spring (150).

5. A mechanical seal (1) according to one or more of the preceding claims, wherein said sealing element (130) has a plurality of outer recesses (131), preferably one for each wave of the wave spring (150), and said wave spring (150) has a plurality of outer teeth (153), preferably one for each wave of the wave spring (150), protruding away from the rotation axis (R) and configured for engaging respective outer recesses (131) for defining said second shape coupling.

6. A mechanical seal (1) according to claim 5, wherein said sealing element (130) has a stop shoulder (132) configured for abutting against respective ends of said wave spring (150), each outer recess (131) being partially obtained at the stop shoulder (132) and partially at an annular surface (133) adjacent to the stop shoulder (132) and normal to the stop shoulder (132).

7. A mechanical seal (1) according to one or more of the preceding claims, wherein said sealing element (130) has an inner annular groove (135) facing said rotation axis (R) and configured for accommodating said wave spring (150), preferably said annular groove (135) having a width, measured parallel to said rotation axis (R), equal to or smaller than a maximum dimension of the wave spring (150) in a released condition.

8. A mechanical seal (1) according to claim 7, wherein said width is comprised between 5 mm and 15 mm and preferably 8 mm and 12 mm.

9. A mechanical seal (1) according to claim 7 or 8, wherein said wave spring (150) has an elastic constant comprised between 10 N/mm and 30 N/mm, preferably between 15 N/mm and 20 N/mm, said wave spring (150) being arranged within said annular groove (135) so as to have a precompression in a completely extended configuration comprised between 200 N and 300 N, preferably between 210 N and 220 N.

10. A mechanical seal (1) according to one or more of claims 7 to 9, wherein said annular body (110) has an outer surface facing said annular groove (135) to define a housing volume (V) at least partially closed for said wave spring (150), said rotating part (100) comprising sealing means (160) interposed between said annular body (110) and said sealing element (130) for sealing said housing volume (V).

11. A mechanical seal (1) according to one or more of the preceding claims, wherein said wave spring (150) has a radial width circumferentially variable according to a strictly increasing function from a minimum value at the second shape coupling to a maximum value at the first shape coupling.

## Patentansprüche

1. Gleitringdichtung (1), umfassend ein mit einer drehenden Welle (A) verbindbares drehendes Bauteil (100) und ein mit einer feste Wand (P) verbindbares festes Bauteil (200);
wobei das genannte drehende Bauteil (100) Folgendes umfasst:
- einen ringförmigen Körper (110), der fest mit einer um eine Drehachse (R) drehende Welle (A) verbunden werden kann;
- ein Dichtungselement (130), das eine drehende Verbindungsfläche (101) aufweist, die darauf ausgelegt ist, gegen eine entsprechende statische Verbindungsfläche (201) des genannten festen Bauteils (200) anzuschlagen; und
- Federelemente, die zwischen dem genannten ringförmigen Körper (110) und dem genannten Dichtungselement (130) wirken, um die genannte drehende Verbindungsfläche (101) gegen die genannte statische Verbindungsfläche (201) gedrückt zu halten und eine gegenseitige Positionsanpassung entlang der genannten Drehachse (R) zwischen dem ringförmigen Körper (110) und dem Dichtungselement (130) zu gestatten;
wobei die genannten Federelemente eine Wellenfeder (150) mit im Wesentlichen ringförmigem Profil umfassen, die eine erste formschlüssige Verbindung mit dem genannten ringförmigen Körper (110) aufweist, die darauf ausgelegt ist, die genannte Wellenfeder (150) um die genannte Drehachse (R) drehbar an dem genannten ringförmigen Körper (110) zu halten, und eine zweite formschlüssige Verbindung mit dem genannten Dichtungselement (130), die darauf ausgelegt ist, das genannte Dichtungselement (130) um die Drehachse (R) drehbar an der genannten Wellenfeder (150) zu halten;
wobei das genannte Dichtungselement (130) eine im Wesentlichen zylindrische Mündung (134) aufweist, wobei der genannte ringförmige Körper (110) einen eine Anschlagschulter (112) definierenden Verbindungsabschnitt (114) aufweist,
**dadurch gekennzeichnet, dass** der genannte Verbindungsabschnitt (114) verschiebbar in die genannte Mündung (134) eingesetzt ist, wobei die genannte Wellenfeder (150) einen kleineren Innendurchmesser als einen Mündungsdurchmesser (134) aufweist und die genannte Anschlagschulter (112) darauf ausgelegt ist, gegen entsprechende Enden der genannten Wellenfeder (150) anzuschlagen.

2. Gleitringdichtung (1) nach Anspruch 1, bei der der genannte ringförmige Körper (110) eine Vielzahl von inneren Aussparungen (111) aufweist, vorzugsweise eine für jede Welle der Wellenfeder (150), und die genannte Wellenfeder (150) eine Vielzahl entsprechender innerer Zähne (151) aufweist, vorzugsweise einen für jede von der Wellenfeder (150) definierte Welle, die zu der Drehachse (R) vorstehen und darauf ausgelegt sind, in die genannten inneren Aussparungen (111) einzugreifen, um die genannte erste formschlüssige Verbindung zu definieren.

3. Gleitringdichtung (1) nach Anspruch 2, bei der die Wellenfeder (150) an jedem genannten inneren Zahn (151) eine im Verhältnis zu der Drehachse (R) in radialer und/oder axialer Richtung verlaufende lokale Verdickung (152) aufweist, wobei die genannte Verdickung (152) durch eine progressive Steigerung der Stärke und/oder Breite ausgehend von einem Mindestwert bis zu einem Höchstwert definiert wird, wobei der genannte Höchstwert der Position des genannten inneren Zahns (151) entspricht.

4. Gleitringdichtung (1) nach Anspruch 3, bei der die genannte Verdickung (152) durch einen in einer äußeren radialen Richtung, entgegengesetzt zu dem genannten inneren Zahn (151) verlaufenden Vorsprung definiert wird, wobei der genannte Vorsprung vorzugsweise eine äußere Kreisbogenform mit einem kleineren Radius als ein Radius eines ringförmigen Profils der Wellenfeder (150) aufweist.

5. Gleitringdichtung (1) nach einem oder mehreren der vorangegangenen Ansprüche, bei der das genannte Dichtungselement (130) eine Vielzahl von äußeren Aussparungen (131) aufweist, vorzugsweise eine für jede Welle der Wellenfeder (150), und bei der die genannte Wellenfeder (150) eine Vielzahl äußerer Zähne (153) aufweist, vorzugsweise einen für jede Welle der Wellenfeder (150), die von der Drehachse (R) vorstehen und darauf ausgelegt sind, in entsprechende äußere Aussparungen (131) einzugreifen, um die genannte zweite formschlüssige Verbindung zu definieren.

6. Gleitringdichtung (1) nach Anspruch 5, bei der das genannte Dichtungselement (130) eine Stoppschulter (132) aufweist, die darauf ausgelegt ist, gegen entsprechende Enden der genannten Wellenfeder (150) anzuschlagen, wobei jede äußere Aussparung (131) teilweise an der Stoppschulter (132) und teilweise an einer an die Stoppschulter (132) angrenzenden und zu der Stoppschulter (132) senkrechten ringförmigen Fläche (133) erzielt wird.

7. Gleitringdichtung (1) nach einem oder mehreren der vorangegangenen Ansprüche, bei der das genannte Dichtungselement (130) eine der genannten Drehachse (R) gegenüberliegende innere ringförmige Nut (135) aufweist, die darauf ausgelegt ist, die genannte Wellenfeder (150) unterzubringen, wobei die genannte ringförmige Nut (135) vorzugsweise, parallel zu der genannten Drehachse (R) gemessen, eine höchstens der maximalen Größe der Wellenfeder (150) in einem ungespannten Zustand entsprechende Breite aufweist.

8. Gleitringdichtung (1) nach Anspruch 7, bei der die genannte Breite zwischen 5 mm und 15 mm und vorzugsweise 8 mm und 12 mm liegt.

9. Gleitringdichtung (1) nach Anspruch 7 oder 8, bei der die genannte Wellenfeder (150) eine Elastizitätskonstante zwischen 10 N/mm und 30 N/mm, vorzugsweise zwischen 15 N/mm und 20 N/mm aufweist, wobei die genannte Wellenfeder (150) in der genannten ringförmigen Nut (135) angeordnet ist, um in einer vollkommen ausgedehnten Konfiguration eine Vorspannung zwischen 200 N und 300 N, vorzugsweise zwischen 210 N und 220 N aufzuweisen.

10. Gleitringdichtung (1) nach einem oder mehreren der Ansprüche 7 bis 9, bei der der genannte ringförmige Körper (110) eine zu der genannten ringförmigen Nut (135) gerichtete Außenfläche aufweist, um ein zumindest teilweise geschlossenes Gehäusevolumen (V) für die genannte Wellenfeder (150) zu definieren, wobei das genannte drehende Bauteil (100) zwischen dem genannten ringförmigen Körper (110) und dem genannten Dichtungselement (130) eingefügte Dichtungsmittel (160) umfasst, um das genannte Gehäusevolumen (V) abzudichten.

11. Gleitringdichtung (1) nach einem oder mehreren der vorangegangenen Ansprüche, bei der die genannte Wellenfeder (150) eine gemäß einer streng steigenden Funktion variable umlaufende radiale Breite von einem Mindestwert an der zweiten formschlüssigen Verbindung bis zu einen Höchstwert an der ersten formschlüssigen Verbindung aufweist.

## Revendications

1. Garniture mécanique d'étanchéité (1), comprenant une partie rotative (100) pouvant être reliée à un arbre rotatif (A) et une partie fixe (200) pouvant être reliée à une paroi fixe (P) ;
ladite partie rotative (100) comprenant :
- un corps annulaire (110) pouvant être relié de manière rigide à un arbre (A) pivotant autour d'un axe de rotation (R) ;
- un élément d'étanchéité (130) ayant une surface de couplage rotative (101) configurée pour venir en butée contre une surface de couplage statique respective (201) de ladite partie fixe (200) ; et
- des moyens élastiques actifs entre ledit corps annulaire (110) et ledit élément d'étanchéité (130) pour maintenir ladite surface de couplage rotative (101) pressée contre ladite surface de couplage statique respective (201) et permettant un réglage de position mutuel le long dudit axe de rotation (R) entre le corps annulaire (110) et l'élément d'étanchéité (130) ;
dans laquelle lesdits moyens élastiques comprennent un ressort ondulé (150) ayant un profil sensiblement annulaire, ayant une première forme couplé audit corps annulaire (110) configurée pour fixer de manière rotative ledit ressort ondulé (150) audit corps annulaire (110) autour dudit axe de rotation (R) et une seconde forme couplé audit élément d'étanchéité (130) configurée pour fixer de manière rotative ledit élément d'étanchéité (130) audit ressort ondulé (150) autour de l'axe de rotation (R) ;
dans laquelle ledit élément d'étanchéité (130) a un orifice sensiblement cylindrique (134), ledit corps annulaire (110) ayant une portion de couplage (114) définissant un épaulement d'appui (112),
**caractérisée en ce que** ladite portion de couplage (114) est insérée de manière coulissante dans ledit orifice (134), ledit ressort ondulé (150) ayant un diamètre interne inférieure à un diamètre d'orifice (134) et ledit épaulement d'appui (112) étant configuré pour venir en butée contre les extrémités respectives dudit ressort ondulé (150).

2. Garniture mécanique d'étanchéité (1) selon la revendication 1, dans laquelle ledit corps annulaire (110) a une pluralité de cavités internes (111), de préférence une pour chaque onde du ressort ondulé (150), et ledit ressort ondulé (150) a une pluralité de dents internes respectives (151), de préférence une pour chaque onde définie par le ressort ondulé (150), faisant saillie vers l'axe de rotation (R) et configurées pour venir en prise avec lesdites cavités internes (111) afin de définir ledit premier couplage de forme.

3. Garniture mécanique d'étanchéité (1) selon la revendication 2, dans laquelle le ressort ondulé (150) possède, au niveau de chacune desdites dents internes (151), un épaississement local (152) s'étendant dans une direction radiale et/ou axiale par rapport audit axe de rotation (R), ledit épaississement (152) étant défini par une augmentation progressive de l'épaisseur et/ou de la largeur à partir d'une valeur minimale jusqu'à une valeur maximale, ladite valeur maximale correspondant à la position de ladite dent interne (151).

4. Garniture mécanique d'étanchéité (1) selon la revendication 3, dans laquelle ledit épaississement (152) est défini par une saillie s'étendant dans une direction radiale externe, opposée à ladite dent interne (151), de préférence ladite saillie ayant une forme externe en arc de cercle avec un rayon inférieur à un rayon d'un profil annulaire du ressort ondulé (150).

5. Garniture mécanique d'étanchéité (1) selon l'une ou plusieurs des revendications précédentes, dans laquelle ledit élément d'étanchéité (130) a une pluralité de cavités externes (131), de préférence une pour chaque onde du ressort ondulé (150), et ledit ressort ondulé (150) a une pluralité de dents externes (153), de préférence une pour chaque onde du ressort ondulé (150), faisant saillie de l'axe de rotation (R) et configurées pour venir en prise avec les cavités externes respectives (131) pour définir ledit second couplage de forme.

6. Garniture mécanique d'étanchéité (1) selon la revendication 5, dans laquelle ledit élément d'étanchéité (130) a un épaulement d'arrêt (132) configuré pour venir en butée contre les extrémités respectives dudit ressort ondulé (150), chaque cavité externe (131) étant partiellement obtenue au niveau de l'épaulement d'arrêt (132) et partiellement au niveau d'une surface annulaire (133) adjacente à l'épaulement d'arrêt (132) et normale à l'épaulement d'arrêt (132).

7. Garniture mécanique d'étanchéité (1) selon l'une ou plusieurs des revendications précédentes, dans laquelle ledit élément d'étanchéité (130) a une rainure annulaire interne (135) faisant face audit axe de rotation (R) et configurée pour recevoir ledit ressort ondulé (150), de préférence ladite rainure annulaire (135) ayant une largeur, mesurée de façon parallèle audit axe de rotation (R), égale à ou inférieure à une dimension maximale du ressort ondulé (150) dans une condition libérée.

8. Garniture mécanique d'étanchéité (1) selon la revendication 7, dans laquelle ladite largeur est comprise entre 5 mm et 15 mm et de préférence entre 8 mm et 12 mm.

9. Garniture mécanique d'étanchéité (1) selon la revendication 7 ou 8, dans laquelle ledit ressort ondulé (150) a une constante élastique comprise entre 10 N/mm et 30 N/mm, de préférence entre 15 N/mm et 20 N/mm, ledit ressort ondulé (150) étant disposé à l'intérieur de ladite rainure annulaire (135) de manière à avoir une pré-compression dans une configuration complètement étendue comprise entre 200 N et 300 N, de préférence entre 210 N et 220 N.

10. Garniture mécanique d'étanchéité (1) selon l'une ou plusieurs des revendications 7 à 9, dans laquelle ledit corps annulaire (110) a une surface externe faisant face à ladite rainure annulaire (135) pour définir un volume de logement (V) au moins partiellement fermé pour ledit ressort ondulé (150), ladite partie rotative (100) comprenant des moyens d'étanchéité (160) interposés entre ledit corps annulaire (110) et ledit élément d'étanchéité (130) pour sceller de façon étanche ledit volume de logement (V).

11. Garniture mécanique d'étanchéité (1) selon l'une ou plusieurs des revendications précédentes, dans laquelle ledit ressort ondulé (150) a une largeur radiale variable de façon circonférentielle selon une fonction strictement croissante d'une valeur minimale au niveau du second couplage de forme à une valeur maximale au niveau du premier couplage de forme.
